# FASCICULE DE BREVET EUROPEEN

(11) **EP 0 606 800 B1**
(45) Date de publication et mention de la délivrance du brevet: **06.12.1995**
(21) Numéro de dépôt: 93403136.0
(22) Date de dépôt: 22.12.1993
(51) Int. Cl.: F16D 66/02

(54) **Disque de frein pour frein à disque**
Bremsscheibe für Scheibenbremse
Brake disc for disc brake

(30) Priorité: 12.01.1993 FR 9300195
(43) Date de publication de la demande: 20.07.1994
(73) Titulaire: ALLIEDSIGNAL EUROPE SERVICES TECHNIQUES, 93700 Drancy (FR)
(72) Inventeur: Guineau, Jacques, F-92700 Colombes (FR); Le Deit, Gérard, F-77181 Courtry (FR)

(56) Documents cités:
- DE-A- 4 002 695
- DE-C- 2 749 772
- FR-A- 2 408 069
- PATENT ABSTRACTS OF JAPAN vol. 8, no. 238 (M-335)(1675) 31 Octobre 1984 & JP-A-59 117 926 (HONDA GIKEN KOGYO K.K.) 7 Juillet 1984

## Description

La présente invention a pour objet un disque de frein pour frein à disque.

Un tel disque de frein comporte de façon classique deux faces planes circulaires et parallèles et une tranche périphérique. Les faces planes comprennent des pistes de frottement contre lesquelles des éléments de friction sont susceptibles d'être appliqués par un moteur de frein, pour ralentir la vitesse de rotation du disque et d'un organe solidaire du disque, comme par exemple une roue de véhicule automobile.

Après un certain nombre d'utilisations d'un frein à disque, les éléments de friction aussi bien que le disque de frein présentent une certaine usure, se manifestant par un diminution d'épaisseur. De par leur constitution, les éléments de friction s'usent beaucoup plus vite que le disque de frein et doivent être changés beaucoup plus fréquemment.

C'est pourquoi on a réalisé de nombreux indicateurs d'usure d'élément de friction, émettant un signal sonore, visuel ou électrique lorsque l'élément de friction ne présente plus qu'une épaisseur minimale prédéterminée.

Par contre, on connaît très peu d'indicateurs d'usure du disque de frein lui-même. La façon la plus courante de mesurer l'usure d'un disque de frein consiste à mesurer son épaisseur à l'aide de dispositifs spéciaux à chaque opération d'entretien du frein ou de remplacement des éléments de friction. Ces dispositifs sont d'une utilisation parfois si complexe que l'opérateur trouve des résultats erronés, et change un disque qui n'était pas totalement usé, ou déclare bon un disque dont l'épaisseur est inférieure au minimum toléré. Si, l'inconvénient n'est qu'économique dans le premier cas, il est intolérable dans le second puisqu'il met en jeu la sécurité de l'installation équipée de ce frein à disque.

On connaît, du document FR-A-2 408 069, un disque de frein et son dispositif de contrôle d'usure. Selon ce document, un évidement est prévu sur le disque de frein sur le côté opposé de la piste de frottement et se prolonge en direction de la surface de frottement. Cet évidement se termine à une distance de la surface de frottement qui correspond à la valeur maximum admissible de l'usure du disque de frein dans la zone de la surface de freinage. De la sorte, il se forme un trou traversant dès que l'usure de la surface de freinage dépasse une valeur prédéterminée.

Lorsqu'un tel disque est utilisé sur un frein à disque de véhicule automobile, la détection visuelle de ce trou est rendue très malaisée du fait du peu de place autour de l'essieu, surtout pour détecter le trou indicatif de l'usure de la surface de friction intérieure, et aléatoire dans le cas d'un disque ventilé. Ce document divulgue donc un dispositif de contrôle, disposé sur un plateau de recouvrement situé en face du disque de frein et qui comporte une ouverture de même niveau radial que le trou borgne, une tige de palpage étant adaptée pour être poussée à travers cette ouverture contre la surface de freinage du disque de frein.

Lorsque le disque de frein est usé au maximum de la valeur admissible, le trou borgne devient un trou ouvert qui traverse complètement le disque de frein, et la tige de palpage s'engage ou se bloque dans celui-ci.

Cette méthode de détection, outre son caractère rudimentaire, nécessite encore un dispositif particulier à installer dans un endroit difficile d'accès. De plus, le disque est en permanence recouvert d'un plateau, ce qui est extrêmement néfaste pour son refroidissement lors d'un freinage.

La présente invention a par conséquent pour objet un disque de frein pour frein à disque dont l'état d'usure apparaisse visuellement et immédiatement, de façon simple et fiable.

Dans ce but, selon l'invention, la tranche du disque comporte au moins un évidement ouvert en direction radiale, qui s'ouvre en direction axiale lorsque l'épaisseur du disque entre les pistes de frottement est inférieure à une valeur prédéterminée.

De la sorte, une simple inspection visuelle du disque, et de sa périphérie en particulier, pourra permettre de constater l'état d'usure du disque et de décider ou non de son remplacement de façon fiable.

D'autres buts, caractéristiques et avantages de la présente invention ressortiront plus clairement de la description qui suit d'un mode de réalisation donné à titre d'exemple non limitatif en référence aux dessins annexés sur lesquels :
- La Figure 1 est une vue en coupe d'un frein à disque auquel est destiné le disque de frein selon la présente invention ;
- La Figure 2 est une vue en perspective partielle d'un disque de frein réalisé conformément à la présente invention ;
- La Figure 3 est une vue en coupe axiale selon la ligne III-III du disque de la Figure 2 ;
- La Figure 4 est une vue semblable à la Figure 3, d'un disque après usure supérieure à l'usure tolérable ;
- La Figure 5 est une vue semblable à la Figure 2 d'une variante de réalisation ; et
- La Figure 6 est une vue semblable à la Figure 2 d'un autre variante de réalisation.

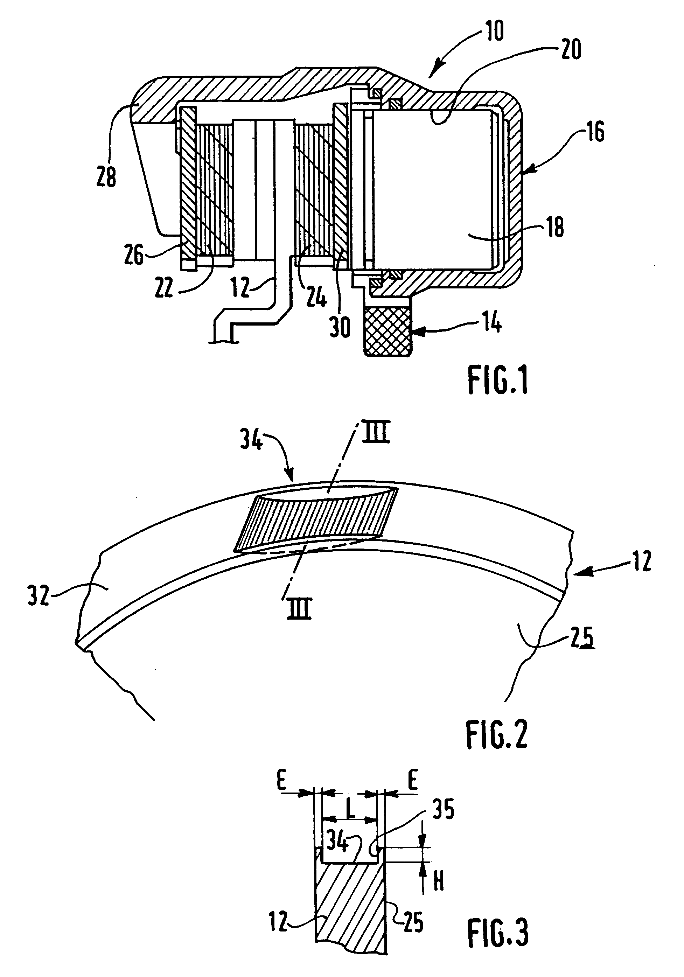

Un frein à disque 10, représenté de façon fragmentaire sur la Figure 1, comprend un disque ou rotor 12 associé de façon connue a un essieu (non représenté) et tournant avec ce dernier. Le boîtier d'essieu (non représenté) porte un organe support 14 sur lequel est monté coulissant un étrier 16, ce dernier comprenant un piston 18 monté coulissant dans un alésage 20 qui communique avec des moyens d'actionnement hydrauliques (non représentés). De façon connue, les moyens d'actionnement sont susceptibles de communiquer du fluide sous pression à l'intérieur de l'alésage 20 pour faire coulisser le piston 18 vers le disque 12.

Afin de ralentir la rotation du disque 12, deux éléments de friction 22 et 24 sont disposés en vis-à-vis des faces opposées du disque 12 et sont susceptibles d'engager ces dernières lors du déplacement du piston 18, définissant ainsi des pistes de frottement 25 annulaires, de largeur radiale égale à la hauteur des éléments de friction.

L'élément de friction 22, disposé axialement vers l'extérieur, est associé à une plaque support 26, elle-même coopérant par tout moyen convenable avec un bras de réaction 28 de l'étrier 16, tandis que l'élément de friction 24, disposé axialement vers l'intérieur, est associé à une plaque support 30. La plaque support 30 est montée coulissante sur l'organe support 14 de façon à pouvoir se déplacer axialement par rapport à ce dernier.

On conçoit bien qu'après un certain nombre de mises en oeuvre du frein à disque, les éléments de friction 22 et 24, ainsi que le disque 12, présentent une certaine usure. Celle des éléments de friction est détectée par des indicateurs connus et est plus rapide que celle du disque.

Conformément à l'invention, il est prévu un moyen simple d'indication de l'usure du disque, représenté sur les Figures.

On voit sur la Figure 2 en perspective partielle une partie du disque 12 et de la tranche 32 de ce disque. Une échancrure ou un évidement 34 est formée dans la tranche 32.

L'échancrure 34, comme on le voit mieux sur la Figure 3, a, en direction axiale du disque 12, une largeur L égale à l'épaisseur minimale tolérable du disque, et une profondeur H au moins égale à la distance entre le bord extérieur des pistes de frottement 25 et le bord extérieur du disque 12. Par raison de symétrie, l'échancrure 34 est centrée dans la tranche 32, de façon que ses parois 35 soient en direction axiale à une distance E de la piste de frottement 25, lorsque le disque est à son état neuf, égale à la moitié de l'épaisseur maximale à user, c'est-à-dire encore égale à la moitié de la différence entre l'épaisseur du disque à l'état neuf et l'épaisseur minimale tolérable.

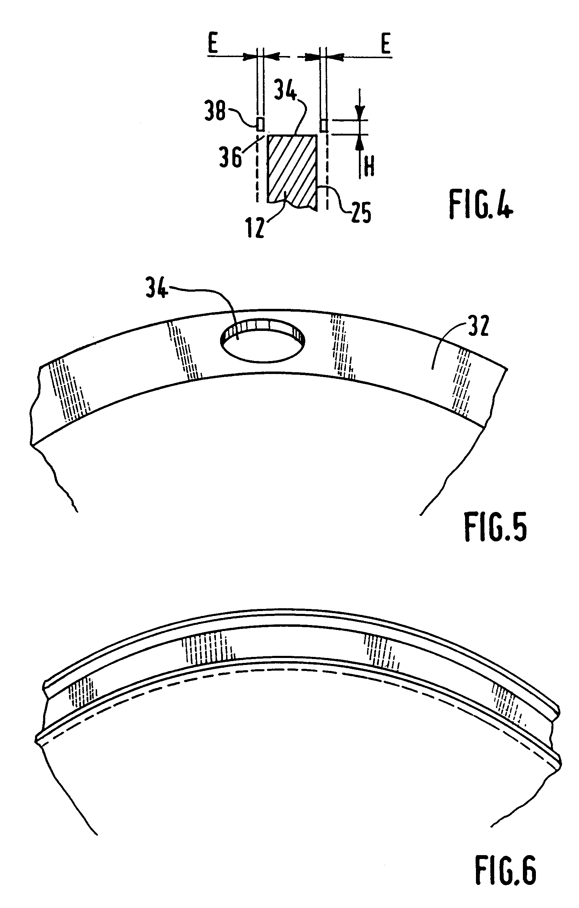

On aura compris de la description qui précède comment est donnée l'indication de l'état d'usure du disque. En effet, comme on peut le voir sur la Figure 4, lorsque l'usure de la piste de frottement 25 est supérieure à la distance E, la profondeur H de l'échancrure 34 étant supérieure à la distance entre le bord extérieur de la piste de frottement 25 et le bord extérieur du disque 12, le volume défini dans l'échancrure 34 va se trouver ouvert en direction axiale par des ouvertures 36. Il se crée donc une partie 38 du disque, située à l'extérieur par rapport à l'ouverture 36, qui forme une sorte de pont. Un tel pont 38 sera facilement arraché soit par la force centrifuge si le disque est susceptible d'être entraîné à de grandes vitesses, soit par les vibrations des éléments de friction venant engager la piste 25 lors d'une action de freinage, et la partie radialement intérieure du pont 38.

Ainsi, lors d'un contrôle de routine du frein à disque, ou lors d'un remplacement des éléments de friction, si l'opérateur décèle la présence d'ouvertures 36 au bord des pistes de frottement, ou l'absence de la partie en pont 38, il saura immédiatement, sans appareil et de façon fiable, que le disque 12, particulièrement dans sa partie située entre les pistes de frottement 25, possède une épaisseur inférieure au minimum tolérable et doit être immédiatement remplacé.

La présente invention procure de plus une autre indication importante. En effet, si l'opérateur décèle, au cours de l'examen ci-dessus ou après avoir démonté le disque pour son remplacement, que le disque présente des ouvertures 36 ou une absence de pont 38 sur un seul des côtés du disque, il saura immédiatement, et là encore sans appareil et de façon fiable, que le disque présente une usure dissymétrique, et qu'une intervention appropriée supplémentaire est à prévoir sur le frein à disque.

Pour éviter de déséquilibrer le disque, on pourra avantageusement prévoir plusieurs échancrures 34 régulièrement réparties angulairement sur la tranche du disque 12, qui pourront alors elles-mêmes contribuer à la réalisation de l'équilibrage du disque.

On pourra évidemment donner à l'échancrure 34 toute forme désirée, pourvu qu'elle respecte les conditions sur E, H et L données plus haut. Par exemple, Figure 5, on a représenté une échancrure 34 cylindrique, de diamètre L et de hauteur H. Avec une telle échancrure, la taille de l'ouverture 36, après usure maximale tolérée, augmentera très vite après le dépassement de cette usure maximale.

On pourra de même prévoir une échancrure de forme parallélépipédique, pour que l'ouverture 36 ait immédiatement sa longueur maximum, et même prévoir une échancrure continue sur la tranche du disque, comme sur la Figure 6 pour former une gorge de section rectangulaire de hauteur H et de largeur L. Une fois l'usure maximale tolérée atteinte, le pont 38, qui dans ce cas est un anneau, est complètement séparé du disque 12 et fournit alors la preuve que le disque est à changer.

Il est bien entendu que l'invention n'est pas limitée aux modes de réalisation qui ont été décrits, mais est susceptible de recevoir de nombreuses modifications qui apparaîtront à l'homme du métier. C'est ainsi que toute autre forme d'échancrure pourra être utilisée, par exemple en carré, en losange, en ovale, etc... De même, l'invention s'applique aussi bien à des freins à disque à étrier fixe, et elle s'applique également à des disques pleins ou ventilés.

## Revendications

1. Disque de frein pour frein à disque (10) comportant deux faces planes circulaires et parallèles et une tranche (32) périphérique, les faces planes comprenant des pistes de frottement (25) contre lesquelles des éléments de friction (22, 24) sont susceptibles d'être appliqués, caractérisé en ce que la tranche (32) du disque (12), comporte au moins un évidement (34) ouvert en direction radiale, qui s'ouvre en direction axiale lorsque l'épaisseur du disque (12) entre les pistes de frottement (25) est inférieure à une valeur prédéterminée (L).

2. Disque de frein selon la revendication 1, caractérisé en ce que l'évidement (34) a une profondeur (H) au moins égale à la distance entre le bord extérieur des pistes de frottement (25) et le bord extérieur du disque (12).

3. Disque de frein selon la revendication 1, caractérisé en ce que l'évidement (34) a une largeur (L) égale à la valeur prédéterminée (L).

4. Disque de frein selon les revendications 2 et 3, caractérisé en ce que l'évidement (34) possède des parois axiales (35) situées, à une distance (E) de la piste de frottement (25), lorsque le disque (12) est à son état neuf, égale à la moitié de la différence entre l'épaisseur du disque à l'état neuf et l'épaisseur correspondant à la valeur prédéterminée (L).

## Claims

1. Brake disk for a disk brake (10) comprising two parallel, circular, plane faces and a peripheral section (32), the plane faces comprising friction tracks (25) against which friction pads (22, 24) are capable of being applied, characterized in that the section (32) of the disk (12) comprises at least one recess (34) open in the radial direction, which opens in the axial direction when the thickness of the disk (12) between the friction tracks (25) is less than a predetermined value (L).

2. Brake disk according to claim 1, characterized in that the recess (34) has a depth (H) at least equal to the distance between the outer edge of the friction tracks (25) and the outer edge of the disk (12).

3. Brake disk according to claim 1, characterized in that the recess (34) has a width (L) equal to the predetermined value (L).

4. Brake disk according to claims 2 and 3, characterized in that the recess (34) has axial walls (35) located at a distance (E) from the friction track (25), when the disk (12) is at its new state, equal to half the difference between the thickness of the disk in the new state and the thickness corresponding to the predetermined value (L).

## Patentansprüche

1. Bremsscheibe für eine Scheibenbremse (10), mit zwei kreisförmigen und zueinander parallelen, flachen Seiten sowie einem Umfangsabschnitt (32), wobei die flachen Seiten Reibungsbahnen (25) umfassen, an welche Reibungselemente (22, 24) angelegt werden können, dadurch gekennzeichnet, daß der Umfangsabschnitt (32) der Scheibe (12) wenigstens eine in radialer Richtung offene Aussparung (34) umfaßt, die sich in axialer Richtung öffnet, wenn die Dicke der Scheibe (12) zwischen den Reibungsbahnen (25) kleiner als ein vorbestimmter Wert (L) ist.

2. Bremsscheibe nach Anspruch 1, dadurch gekennzeichnet, daß die Aussparung (34) eine Tiefe (H) aufweist, die wenigstens gleich dem Abstand zwischen dem Außenrand der Reibungsbahnen (25) und dem Außenrand der Scheibe (12) ist.

3. Bremsscheibe nach Anspruch 1, dadurch gekennzeichnet, daß die Aussparung (34) eine Breite (L) aufweist, die gleich dem vorbestimmten Wert (L) ist.

4. Bremsscheibe nach den Ansprüchen 2 und 3, dadurch gekennzeichnet, daß die Aussparung (34) axiale Wände (35) aufweist, die in einem Abstand (E) von der Reibungsbahn (25) angeordnet sind, der bei einem neuwertigen Zustand der Scheibe (12) gleich der Hälfte der Differenz zwischen der Dicke der Scheibe in neuwertigem Zustand und der entsprechenden Dicke bei dem vorbestimmten Wert (L) ist.
